# EUROPEAN PATENT APPLICATION

(11) **EP 3 893 360 A1**
(43) Date of publication of application: **13.10.2021**
(21) Application number: 20168738.1
(22) Date of filing: 08.04.2020
(51) Int. Cl.: H02J 9/06, H02J 1/10, H02J 7/00

(54) **POWER SUPPLY, COMMUNICATION DEVICE AND METHOD FOR CONTROLLING A POWER SUPPLY**

(71) Applicant: Rohde & Schwarz GmbH & Co. KG, 81671 München (DE)
(72) Inventor: FRIEDL, Richard, 85540 Haar (DE); REHM, Markus, 78052 Villingen-Schwenningen (DE)
(74) Representative: Isarpatent

(57) **Abstract**

A power supply arrangement comprising at least two power sources is provided. The operation of the individual power sources is prioritized by adapting the voltage level of the output voltages provided by the individual power sources. In particular, the output voltages are set such that the output voltage of an active power source is higher than an output voltage of a standby power source. In this way, a control and prioritization of power supply with multiple power sources can be performed in very simple, efficient and reliable manner.

## Description

### TECHNICAL FIELD

The present invention relates to a power supply, a communication device and a method for controlling a power supply. Further, the present invention relates to a use of a power supply in a communication device. In particular, the present invention relates to a power supply with at least two power sources.

### BACKGROUND

Although applicable in principle to any power supply with at least two power sources, the present invention and its underlying problem will be hereinafter described in connection with a redundant power supply of a communication device.

Some devices such as computer systems of a data center or communication devices such as base stations or the like require high availability. It is for this purpose that at least some elements of such a computer or communication system are provided with additional components.

It is for this purpose that a redundant power supply may comprise a number of two or more power sources. Accordingly, if one of these power sources fails, another power source may take over the operation for proving power. In this connection, it is necessary to control the operation of the individual power sources. In particular, the individual power sources may be operated according to a predetermined order of priority. Thus, the power source having the highest priority provides power to the system, and the remaining power sources may be in a standby mode. However, since all power sources may be arranged such that all power sources provide power to a same power input of the system, measures have to be taken in order to avoid a current flowing from one power source to another power source. However, such measures may require a complex configuration of a redundant power supply system.

Against this background, a problem to be solved by the present invention is to provide a simple and reliable control of power sources in a redundant power supply arrangement with at least two power sources. In particular, the present invention aims to provide a simple arrangement of a power source with multiple power sources which can prioritize one power source against the remaining power sources in a simple but reliable manner.

### SUMMARY

The present invention provides power supply, the use of the power supply, a communication device and a method for controlling power supply with the features of the independent claims. Further advantages embodiments are subject matter of the dependent claims.

According to a first aspect, a power supply is provided. The power supply comprises a first power source, a second power source and an output terminal. The first power source is configured to provide a first output voltage at a first output port. The second power source is configured to provide a second output voltage at a second output port. The second power source comprises a voltage controller. The voltage controller is configured to control the second output voltage. The output terminal is electrically coupled with the first output port of the first power source and the second output port of the second power source. The voltage controller of the second power source is configured to adapt the output voltage of the second power source based on an operating mode of the first power source.

According to a further aspect, the power supply is used in a communication device. In particular, the power supply may be used in the radio, especially an air traffic control radio. According to still a further aspect, a communication device is provided. The communication device comprises a power supply according to the first aspect. In particular, the communication device may be a radio, especially an air traffic control radio.

According to another aspect, a method for controlling a power supply is provided. The power supply may comprise at least two power sources. An output port of each of the at least two power sources is electrically connected to an output terminal of the power supply. The method comprises a step of detecting an operating mode of a first power source of the at least two power sources. Further, the method comprises a step of decreasing an output voltage of a second power source of the at least two power sources, if the first power source is in an active operating mode. Further, the method comprises increasing the output voltage of the second power source, if the first power source is deactivated.

The present invention is based on the finding that in a power supply with multiple power sources, the output terminals of the power sources may be electrically connected with each other. In such a configuration, it is necessary to take measures against currents flowing from the output of one power source to the output of another power source. Furthermore, it is desirable to prioritize the order of the individual power sources such that a power source having a lower priority can take over the power supply very fast in case that a power source having a high priority fails.

The present invention takes into account this finding and aims to provide a power supply with multiple power sources, wherein the order of the individual power sources can be prioritized by a very simple configuration. In particular, the present invention aims to provide a configuration of multiple power sources, wherein a current flowing from the output of one power source to another power source can be avoided by simple measures. Furthermore, the present invention provides a configuration of a power supply with multiple power sources wherein the power supply can be taken over very quickly from another power source, if the currently operation power source fails. In this way, a reliable redundant power supply is achieved by a simple configuration.

The main concept of the present invention is based on a scheme for adapting the output voltage. In particular, the output voltage level of the active power supply is set higher than the output voltage level of the one or more standby power sources. In this way, the order of priority of the multiple power sources can be set very easily. Furthermore, since many power sources usually already comprise a control circuit for controlling the output voltage, the particular approach of the present invention does not require complex hardware modifications. Moreover, the power supply can be realized in most parts by conventional hardware elements.

The first power source and the second power source may be any kind of appropriate power source for providing appropriate power for serving a connected load. For this purpose, the respective power source may provide power with a specific output voltage. It is understood, that any kind of output power may be possible. For example, the output power may be provided as a direct current (DC) or alternating current (AC). The voltage of the output power may be in an appropriate range according to the connected load. For example, the power supply, and consequently the first power source and the second power source may provide output power with a voltage of 5 V, 12 V, 24 V, 48 V, 230 V or any other appropriate voltage level. For example, the first power source and/or the second power source may be connected to an appropriate power supply network. Accordingly, the first power source and/or the second power source may comprise a power converter for converting the input power provided by a power supply network to a desired output power. Furthermore, the first power source and/or the second power source may be connected to any kind of power generator, for example an emergency power generator, a fuel cell or the like. Moreover, the first power source and/or the second power source may be connected to a battery, or the battery may be included in the first power source and/or the second power source. However, it is understood, that any other kind of source for providing input power to the first power source and the second power source may be also possible.

The first power source and the second power source may be connected to a same input power. However, in order to further improve the reliability, it may be possible that the first power source and the second power source connected to a different sources for providing the input power.

In order to convert the input power of the first power source and the second power source to the desired output power, the power sources may comprise any kind of appropriate elements or components such as transformers, inductors, capacitors, transistors etc. Since the general concept of power converters is well-known in the art, further explanations are omitted here.

At least the second power source may comprise a voltage controller for controlling the voltage level of the output power provided by the second power source. However, it is understood, that the first power source may also comprise a voltage controller for controlling the voltage level of the output power provided by the first power source. The voltage controller may receive a voltage level of the output power provided by the respective power source and control the operation of the respective power source in order to adapt the voltage level of the output power accordingly. In this way, the voltage level of the respective output power is set to a predetermined voltage level or a voltage level within a predetermined range. For example, the voltage controller may adapt a duty cycle of an operating frequency within the respective power source. However, it is understood, that any other scheme for adapting the voltage level of an output power may be possible, too. Further to the feedback path of the voltage controller for receiving a signal corresponding to the voltage of the output power, the voltage controller may receive one or more further signals. For example, the voltage controller may receive a signal for indicating a desired voltage level or a desired range of a voltage level for the output power.

The first power source may provide the output power at a first output port, and the second power source may provide the second output power at a second output port. In order to provide the output power of the first power source and the second power port to a common input port of a connected load, the first output port and the second output port may be electrically coupled to an output terminal of the power supply. For example, the first output port and the second output port may be direct electrically connected with the output terminal of the power supply. However, as will be described in more detail below, appropriate elements for controlling a current flow between the first and the second output port and the output terminal may be arranged between the first and the second output ports and the output terminal.

The power supply may be used, for example, in a communication device such as a radio. In particular, the power supply may be used in a radio of an air traffic control system or the like. In this way, a reliable and safe power supply of the radio, in particular an air traffic control radio, is provided. Thus, not only the reliability of the power supply is improved, but also the safety of the whole system using this communication device. For example, by using the power supply according to the present invention in a communication device of an air traffic control system, the safety and availability of the communication system is improved, and consequently, the safety and availability of the whole air traffic control system is improved, too.

As mentioned above, the communication system may be a radio for establishing a communication link. In particular, the radio may establish a communication link in an air traffic control system. For example, the radio may be a radio used in an airborne device, for example an airplane or the like. Furthermore, the radio may be a radio of a ground-based communication link in air traffic control system.

However, it is understood, that any other kind of communication system, in particular any other kind of radio may also comprise a power supply according to present invention.

Due to the compact and efficient configuration of the power supply, it is possible to reduce the weight and volume of the whole power supply arrangement. In this way, a high available and safe power supply for mobile systems such as radios, in particular radios in an air traffic control system can be achieved. Weight and volume is a very important factor when designing airborne devices such as airplanes, helicopters or the like.

Further embodiments of the present invention are subject of further subclaims and of the following description referring to the drawings.

In a possible embodiment, the power supply comprises a first diode and a second diode. The first diode is arranged in an electrical path between the first output port of the first power source and the output terminal of the power supply. Accordingly, the second diode is arranged in an electrical path between the second output port of the second power source and the output terminal of the power supply.

By arranging a diode between the output ports of the power supplies and the output terminal of the power source, it is possible to prevent a current flowing from the first power source to the second power source or from the second power source to the first power source. Accordingly, damages due to a reverse current can be prevented. Such a configuration of diodes may be known as so called "OR-ing". In case that an appropriate diode is already arranged inside the respective power source, the diode between the output port of the power source and the output terminal of the power supply can be omitted.

In a possible embodiment, the power supply comprises a first semiconductor switch arranged in parallel to the diode between the first output port and the output terminal, and a second semiconductor switch arranged in parallel to the diode between the second output port and the output terminal. In other words, a semiconductor switch is arranged in parallel to each diode between the output port of a power source and the output terminal of the power supply.

Furthermore, the power supply may comprise a control unit. The control unit may be configured to close one of the semiconductor switches. In particular, the control unit may close the semiconductor switch parallel to a diode, when a current is flowing through the respective diode. In other words, the semiconductor switch connected to the output port of a power source is connected which provides the highest output voltage. By closing the semiconductor switch, the power loss through the diode can be reduced. Since semiconductor switch may provide a more efficient electrical connection, if the semiconductor switch is closed, the total power losses can be reduced.

In a possible embodiment, the voltage controller of the second power source is configured to reduce the output voltage of the second power source, if the first power source is in an active operating mode.

In particular, the voltage level of the output voltage provided by the second power source is reduced to a voltage lower than the voltage level of the voltage provided by the first power source. In this way, the first power source may provide the power for driving a load at the output terminal of the power supply. Since the voltage level of the output voltage provided by the second power source is lower than the voltage level of the output voltage provided by the first power source, the second power source will provide no output power. In this way, the first power source can be easily prioritized with respect to the second power source.

An active operating mode of the first power source may be any kind of operating mode in which the first power source can provide an appropriate output power for driving the load at the output terminal of the power supply. For example, an active operating mode may be a mode in which the first power supply can provide an output power with an appropriate voltage level, in particular a voltage level higher than a predetermined threshold value or a voltage level within a predetermined range. However, it is understood, that any other criterion for specifying an active operating mode may be also possible.

In a possible embodiment, the voltage controller of the second power source may be configured to increase the output voltage of the second power source, if the first power source is deactivated. In particular, the voltage level of the output power provided by the second power source may be increased to a voltage higher than the voltage level of the output power provided by the first power source.

By increasing the voltage level of the output voltage provided by the second power source, the output power provided by the second power source may be used for driving the load connected at the output terminal of the power supply. Accordingly, the second power source is prioritized over the first power source. In this way, the power supply may easily switch from the first power source to the second power source by increasing the voltage level of the output voltage provided by the second power source. The first power source may be considered as deactivated in any case when the first power source does not provide an appropriate output power. For example, the first power source may be considered as deactivated, if the first power source is not in the position to provide an output voltage with an appropriate voltage level, e.g. an output voltage with a voltage higher than a predetermined threshold or within a predetermined voltage range. However, any other state of the first power source may be also considered as deactivated.

In a possible embodiment, the voltage controller may increase the output voltage of the second power source to a predefined voltage level. As already mentioned above, the predefined voltage level may be a voltage level higher than the voltage level provided by the first power source. For example, the predefined voltage level may be even a voltage level which is equal or even higher than the voltage level of the output power provided by the first power source in a normal operating mode.

In a possible embodiment, the power supply may comprise a monitoring device. The monitoring device may be configured to receive the first output voltage. Accordingly, the monitoring device may determine an operating status of the first power supply based on the voltage level of the first output voltage. As already mentioned above, the first power supply may be considered as active in case that the voltage level of the first output voltage is higher than a predetermined threshold value or within a predetermined voltage range. However, it is understood, that any other condition for specifying the operating status of the first power supply may be also possible. In particular, it may be possible that the first power supply is considered to be deactivated, if the voltage level of the first output voltage does not correspond to predetermined conditions such as a voltage higher than a predetermined threshold value or a voltage within a predetermined range.

In a possible embodiment, the monitoring device may comprise a reference voltage source. The reference voltage source may be configured to provide a reference voltage. For example, the reference voltage may correspond to a desired output voltage of the first power source. However, any other appropriate reference voltage may be also possible.

The monitoring device may be configured to determine an active operating mode of the first power source, if the voltage level of the first output voltage is equal or higher than a voltage level of the reference voltage. Accordingly, the first power supply may be considered to be deactivated if the above-mentioned condition is not fulfilled. However, any other condition for differentiating between an active and deactivated first power supply may be also possible.

In a possible embodiment, the first power source is configured to provide a status signal. The status signal may indicate an operating mode of the first power source. For example, the status signal may be a power good or power fail signal of the first power source. However, any other appropriate status signal for indicating a status of the first power source may be also possible.

The voltage controller of the second power source may be configured to receive the status signal provided by the first power source. Further, the voltage controller of the second power source may be configured to adapt the second voltage based on the received status signal. In particular, the status signal may be taken into account in order to determine whether the first power source is activated or deactivated.

In a possible embodiment, the voltage controller may comprise a voltage divider. The voltage divider may comprise at least three resistors in series. The voltage divider may be arranged between the output port of the second power supply and a reference potential. A first node of the voltage divider may be a node connecting a first resistor and a second resistor, and a second node of the voltage divider may be a node connecting a second resistor and a third resistor. The first node of the voltage divider may be electrically connected with an interface of the first power supply which provides the status signal, and a second node of the voltage divider may be electrically connected to the voltage controller. In this way, the signal provided to the voltage divider may change depending on the voltage of the status signal. Accordingly, an efficient signal for controlling the operation of the second power source is achieved by combining the status signal of the first power supply and the output voltage of the second power supply.

In a possible embodiment, voltage controller comprises a voltage divider, for example a voltage divider with at least two resistors. Further, the voltage controller may comprise a control switch. The control switch may be configured to bypass a segment of the voltage divider based on the operation mode of the first power supply. For example, the control switch may bypass at least one of the resistors of the voltage divider. Accordingly, a node between two resistors of the voltage divider may provide a signal with a voltage level which depends on the state of the control switch, and accordingly, this voltage level depends on the operating mode of the first power source.

In a possible embodiment, the second power supply is shut down if the first power supply is in an active operating mode. Alternatively, the second power supply may be set in a standby state if the first power supply is in an active operating mode. The second power supply may be further activated if the first power supply is deactivated.

In order to shut down or set the second power supply in a standby mode, the voltage level of the second output voltage may be set to 0 V (zero Volt). Furthermore, the second power supply may be completely switched off, or at least a part of the power supply may be switched off or set in a power save mode.

In a possible embodiment, at least one of the first and the second power source, preferably the second power supply may comprise a battery. By prioritizing the first power supply over the second power supply, the battery of the second power supply may be only discharged if necessary, i.e. if the first power supply is not in the position to provide an appropriate output power.

In a possible embodiment, the power supply may comprise at least one further power source. Each of the further power source may comprises a further voltage controller. The further voltage controllers may be configured to adapt the output voltage of the respective further power source based on the operating mode of the first power source. Furthermore, the further voltage controllers may be also configured to adapt the output voltage of the respective further power source based on an operating mode of the second power source and/or other further power sources.

Accordingly, by using three or more power sources for providing a redundant power supply, the reliability of the power source can be further improved. By controlling the voltage levels of the individual power sources, the power sources can be prioritized in an appropriate manner. In this way, a simple and efficient control of the individual power sources can be achieved.

With the present invention it is therefore possible, to control the operation of multiple power sources in a redundant power supply with at least two power sources. In particular, the voltage level of the output voltage of the respective power sources is adapted. By reducing the output voltage of standby power sources, the output power of the active power source with the highest output voltage is used for driving a load connected to the power supply. Since it is only necessary to slightly reduce the output voltage of the further power sources, the remaining power sources can easily take over the power supply in case of a failure of the currently active power supply. In this way, the power supply is switched over to another power source within a short period of time and especially with only very small impact to the output power provided by the power supply.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments, which are specified in the schematic figures and drawings, in which:
- Fig. 1:: shows a schematic block diagram of a power supply according to an embodiment;
- Fig. 2:: shows a schematic block diagram of a power supply according to a further embodiment;
- Fig. 3:: shows a schematic block diagram of a voltage controller in a power source according to an embodiment;
- Fig. 4:: shows a schematic block diagram of an input circuit for a voltage controller of a power supply according to an embodiment;
- Fig. 5:: shows a schematic diagram of an input circuit for a voltage controller of a power supply according to another embodiment;
- Fig. 6:: shows a schematic block diagram of a power supply according to another embodiment;
- Fig. 7:: shows a schematic block diagram of a communication device with a power supply according to another embodiment; and
- Fig. 8:: shows a flow diagram of a method for controlling a power supply according to an embodiment.

### DESCRIPTION OF EMBODIMENTS

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown in scale.

In the drawings, same, functionally equivalent and identical operating elements, features and components are provided with same reference signs in each case, unless stated otherwise.

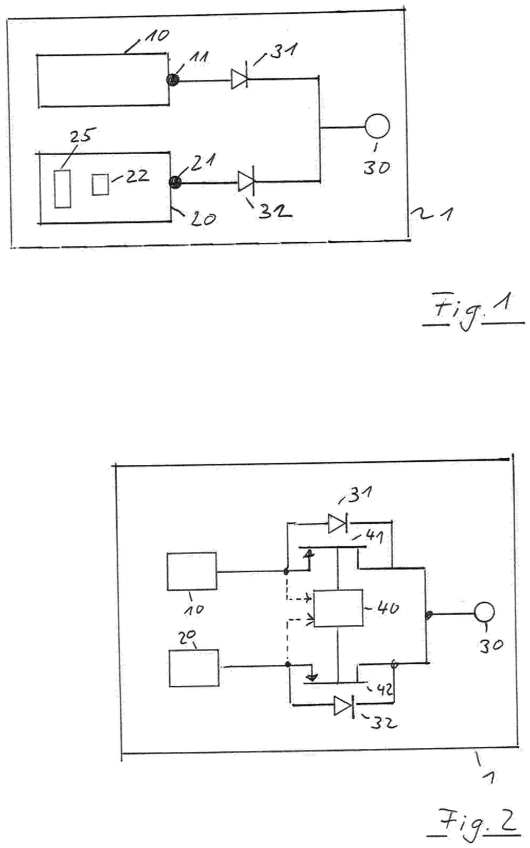

Figure 1 shows a schematic block diagram of a power supply 1 according to an embodiment. The power supply 1 comprises a first power source 10 and a second power source 20. The first power source 10 may provide a first output voltage at a first output port 11. Accordingly, the second power source 20 may provide a second output voltage at a second output port 21. The first output port 11 and the second output port 21 are electrically connected to the output terminal 30 of the power supply. In order to prevent a backward directed current, a first diode 31 may be arranged between the first output port 11 and the output terminal 30, and a second diode 32 may be arranged between the second output port 21 and the output terminal 30. In this way, it is possible to prevent a current flowing from the first output port 11 to the second output port 21 or a current flowing from the second output port 21 to the first output port 11.

The first power source 10 and the second power source 20 may be any kind of appropriate power source. For example, the first and/or the second power source 10, 20 may comprise a power converter for converting an input power provided to the respective power source 10, 20 to an appropriate output power with a desired voltage level. For this purpose, the power sources 10, 20 may be provided with electrical power from a power grid connected to the respective power source 10, 20. However, it may be also possible that one or more of the power sources 10, 20 may be powered by a battery 25 or the like. Furthermore, it is understood, that any other appropriate source for providing input power to the power sources 10, 20 may be possible.

The input power provided to the first and/or second power source 10, 20 may be any kind of input power. In particular, the input power may be provided as alternating current or direct current. Furthermore, the voltage of the input power may be in any appropriate range which fits to the specifications of the respective power source 10, 20. Even though it may be possible that the first power source 10 and the second power source 20 may be connected to a current resource for providing the input power, the reliability of the power supply can be further improved by connecting the first power source 10 and the second power source 22 different sources for providing input power.

The first power source 10 and the second power source 20 may convert the respective input power to an appropriate output power which fits the requirements of the power source. For this purpose, the power sources 10, 20 may comprise rectifiers, inverters, transformers or any other appropriate component for providing an appropriate output power. For example, the power sources 10, 20, in particular the first power source 10 may comprise an internal control loop for controlling the voltage level of the respective output voltage.

Furthermore, at least the second power source 20 may comprise a voltage controller 22. Voltage controller 22 may control the voltage level of the output voltage provided at the second output port 21. For this purpose, voltage controller 22 may apply any appropriate control scheme. For example, controller 22 may adapt a duty cycle of an internal frequency in order to control the voltage level of the second output voltage provided by the second power source 20.

In addition to an internal control loop which controls the operation of the second power source 20 based on the voltage level of the second output voltage provided by the second voltage source 20, voltage controller 22 may take into account further information. In particular, voltage controller 22 may take into account information of the first power source 10. For example, voltage controller 22 of the second power source 20 may take into account an operating mode of the first power source 10. This operating mode may be determined based on any kind of appropriate signaling received from the first power source 10. As will be described below in more detail, voltage controller 22 may take into account a voltage level of the first output voltage provided by the first power source 10, status information such as a power good or a power failure signal or any other appropriate signaling from the first power source 10.

In this way, voltage controller 22 may control the voltage level of the second output voltage provided by the second power source 20 based on the operating mode of the first power source 10. For example, voltage controller 22 may reduce the voltage level of the second output voltage provided by the second power source 20, if the first power source 10 is in an active operating mode. In particular, voltage controller 22 may reduce the output voltage of the second power source 20 to a voltage level which is lower than the voltage level of the first output voltage provided by the first power source 10. In this way, a current will flow from the first output port 11 of the first power source 10 to the output terminal 30 of the power source 1 and further through a load connected to the power source 1 at the output terminal 30. However, since the output voltage of the first power source 10 is higher than the output voltage of the second power source 20, the voltage at the output terminal 30 of the power source 1 will be also higher than the voltage provided by the second power source 20. Accordingly, no current will flow out of the second power source 20.

In case that the first power source 10 does no longer provide power to the output terminal 30, the output power may be provided by the second power source 20. For example, a failure may occur in the first power source 10, or the input power of power source 10 may be no longer available. However, any other reason for switching from the first power source 10 to the second power source 20 may be also possible. In any case, the first power source 10 may be deactivated, and in response to this, the second power source 20 may be activated. Accordingly, voltage controller 22 of the second power source 20 may detect a change in the operating mode of the first power source 10. In response to this change of the operating mode of the first power source 10, voltage controller 22 may increase the voltage level of the output voltage provided by the second power source 20. In particular, the output voltage of the second power source 20 may be increased to a voltage level higher than the voltage level provided by the first power source 10.

For example, in case that a failure occurs in first power source 10 or in case that the input power of the first power source 10 may be lost, the voltage level at the first output port 11 of the first power source 10 may decrease or even fall to almost zero Volt. Voltage controller 22 of the second power source 20 may detect this decrease of the voltage level of the first output voltage. In response to this, voltage controller 22 may adapt the voltage level of the second output voltage provided by the second voltage source 20 to a desired voltage level of the output power which shall be provided at the output terminal 30.

Since the voltage level of the second output voltage provided by the second power source 20 has been decreased only slightly below the desired voltage level, in particular the voltage level provided by the first power source 10 before a failure occurs, power source 20 can take over the power supply within a very short period of time. Furthermore, since the voltage level of the output power provided at the output terminal 30 does not fall below the reduced output voltage which has been provided by the second power source 20 while the first power source 10 has been activated, a load connected at the output terminal 30 may be still provided with sufficient power in any point of time.

The above described configuration only requires two diodes 31, 32 in order to prevent unwanted current between the first output port 11 of the first power source 10 and the second output port 21 of the second power source 20. Moreover, the prioritization of the power sources is performed by slightly reducing the voltage level of the output voltage provided by a second power source 20. Since a power source usually comprises a voltage controller, no further complex hardware components are required in order to achieve the above mentioned prioritization and takeover of the power supply between the first power source 10 and the second power source 20.

In the above described example, the first power source 10 is prioritized over the second power source 20 by reducing the voltage level of the output voltage provided by the second power source 20. For this purpose, it may be sufficient to slightly reduce the voltage level of the output voltage provided by the second power source 20. For example, in case that an output voltage in the range of about 5 to 12 V is provided, the output voltage may be reduces by about 0.5 V. In case that higher output voltages are provided, it may be possible to reduce the output voltage by 1 V, a few Volts or the like. For example, it may be possible to reduce the output voltage of power sources by 10%, 5 %, 2 %, 1% or the like with respect to the output voltage of the active power source.

Instead of reducing a voltage level of a power source which is currently not active, it may be also possible that a power source which is currently not active (e.g. in a standby mode or the like) is maintained at a specific voltage level and the voltage level of a currently active power source is increased. For example, the voltage level of an active power source may be increased by 1 %, 2 %, 5 % or the like. In such an example, voltage controller 22 may increase the voltage level of the output voltage provided by the second power source 20 as long as the second power source 20 is active, while the voltage level of the first power source 10 remains at an originally specified voltage level. In case that the second power source 20 is deactivated, for example when a failure occurs or the like, the output voltage of the second power source 20 may drop down and consequently, the power supply is taken over by the first power source 10.

Figure 2 shows a schematic block diagram of a further power supply 1 according to an embodiment. The embodiment according to figure 2 mainly corresponds to the previously described embodiment according to figure 1. Thus, all explanations regarding to figure 1 also apply to the embodiment according to figure 2.

The embodiment according to figure 2 differs from the previously described embodiment in that a first semiconductor switch 41 is arranged in parallel to the first diode 31. Accordingly, a second semiconductor switch 42 is arranged in parallel to the second diode 32. The first semiconductor switch 41 and the second semiconductor switch 42 may be controlled by a control unit 40. For example, control unit 40 may close one of the semiconductor switches 41 or 42 in case that a current may flow through the diode 31, 32 in parallel to the respective semiconductor switch 41, 42. In this way, the related semiconductor switch 41, 42 may bypass the respective diode 31, 32. Since a closed semiconductor switch 41, 42 has a significantly lower power loss than a diode 31, 32, the power losses of the power supply 1 can be reduced by controlling the power switches 41, 42 accordingly. By the above described scheme, control unit 40 controls the semiconductor switch 41, 42 connected to the power source 10, 20 which provides the higher output voltage. For this purpose, control unit 40 may monitor the output voltage of the power source 10, 20 and control the opening and closing of the semiconductor switches 41, 42 accordingly.

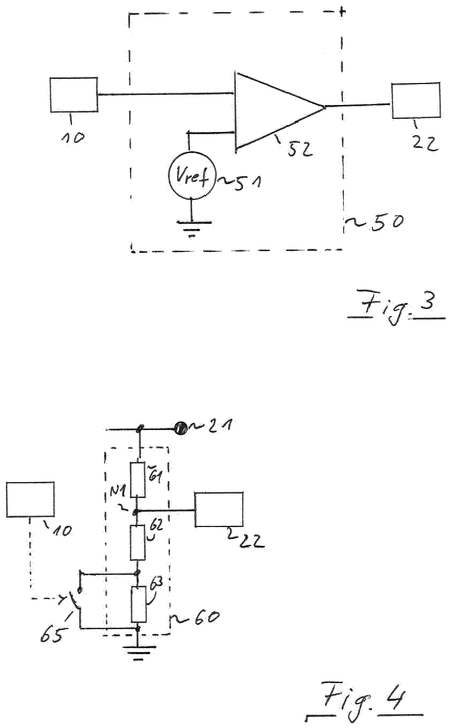

Figure 3 shows a schematic block diagram illustrating a monitoring device 50 for determining an operating state of the first power source 10 by the voltage controller 22 according to an embodiment. For this purpose, voltage controller 22 may comprise a reference voltage source 51. This reference voltage source 51 may be compared, for example by a comparator 52 or the like with the first output voltage provided by the first power source 10. However, it is understood, that any other arrangement for comparing the output voltage of the first power source 10 with reference voltage may be also possible.

Figure 4 shows a schematic diagram for adapting the voltage control by a voltage controller 22 according to an embodiment. As can be seen in figure 4, a voltage divider 60 may be arranged between a line providing the second output voltage provided by the second voltage source 20 and a reference potential. Voltage divider 60 may comprise, for example three resistors 61, 62, 63 which are arranged in series. A first node N1 between a first resistor 61 and a second resistor 62 may be connected with voltage controller 22. Further, a switch 65, for example a semiconductor switch such as a transistor or the like may be arranged in parallel to a third resistor 63. The operation of the switch 65 may be controlled based on a voltage level of the first output voltage provided by the first power source 10. For example, switch 65 may be closed, if the voltage level of the first output voltage provided by the first power source 10 is higher than a predetermined threshold value. In case that the first output voltage provided by the first power source 10 falls below the predetermined threshold, switch 65 may be opened. Accordingly, the voltage level at the first node N1 may change depending whether or not switch 65 is opened or closed. In this way, the input signal provided to voltage controller 22 also changes depending on whether or not switch 65 is closed. Thus, the operation of voltage controller 22, and consequently the voltage level of the output voltage provided by the second power source 20 also changes depending on the state of switch 65, and consequently depending on the voltage level of the voltage provided by the first power source 10.

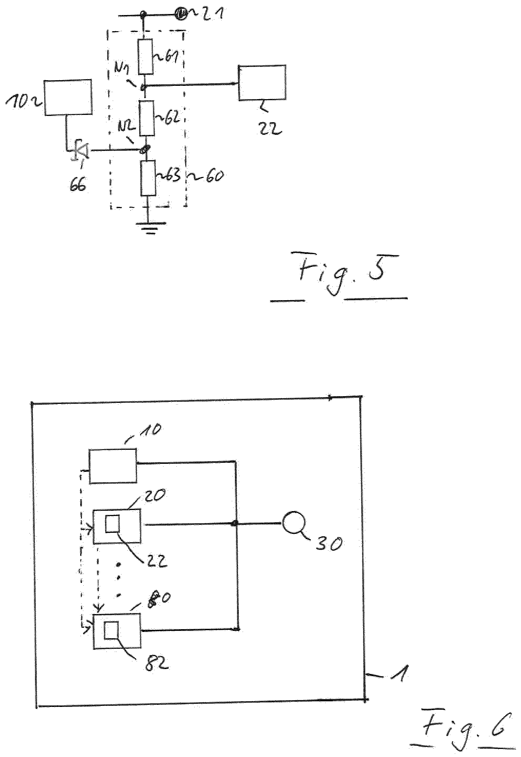

Figure 5 shows another embodiment of a circuit for providing an input signal to voltage controller 22 according to an embodiment. Similar to figure 4, a voltage divider 60 is arranged between the line for providing the second output voltage of the second power source 20 and the ground potential. First node N1 between the first resistor 61 and the second resistor 62 may be also connected to an input of voltage controller 22. A further node N2 between the second resistor 62 and the third resistor 63 may be connected with the first power source 10. For example, the second node N2 may be connected with the first output port 11 of the first power source 10. In such a case, an additional element such as a Zener diode 66 may be arranged in the electrical path between the first output port 11 and the second node N2.

Alternatively, the second node N2 may be connected with a signaling output of the first power source 10, wherein this signaling output may provide a signal depending on the operating mode of the first power source 10. For example, the signaling output may provide a power good signal or a power failure signal. However, any other appropriate signaling may be possible, too. In this case, the signaling output may be connected with the second node N2, and consequently, the voltage level at this second node N2 depends on the status of the first power source 10. Accordingly, the voltage level at the first node N1 also changes depending on the status of the signaling by the first power source 10.

Figure 6 shows a schematic block diagram of a power source 1 according a further embodiment. The embodiment according to figure 6 mainly is based on the previously described embodiments, wherein the embodiment according to figure 6 comprises one or more further power source 80. In such an arrangement, each additional power source 80 may also comprise a voltage controller 82 for controlling the voltage level of an output voltage provided by the respective further power source 80. The voltage controllers 22, 82 may take into account not only the operating mode of the first power source 10 but also operating modes of the other related power sources 20, 80. For example, an additional power source 80 make take into account the operating mode of the first power source 10 and the second power source 20. Furthermore, in case that two or more additional power sources 80 are provided, each power source 80 may take into account the operating modes of the other additional power sources 80. Accordingly, the second power source 20 may take into account the operating modes of one or more other power sources 80. In this way, a well-defined prioritization of all related power sources 10, 20, 80 can be achieved.

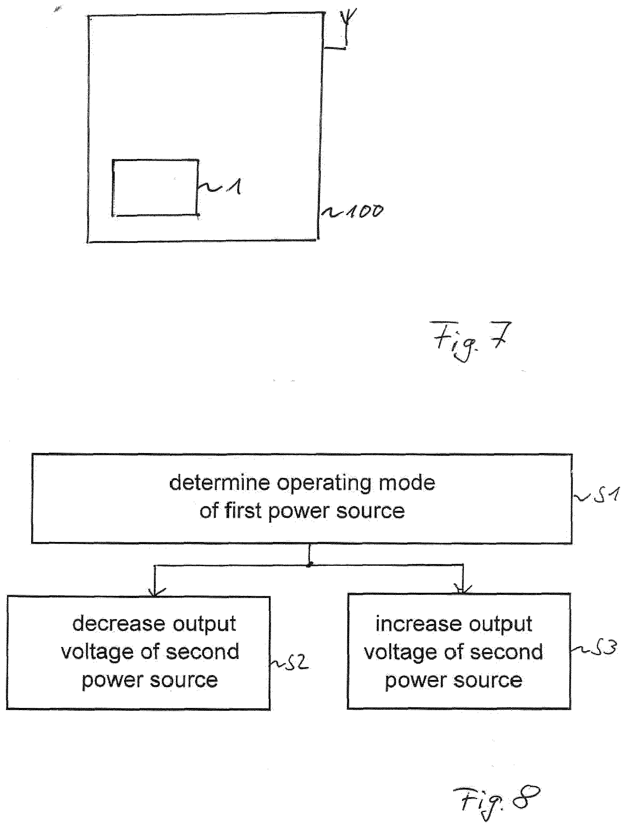

Figure 7 shows a communication device 100 with a power supply 1 according to an embodiment. The communication device 100 may be, for example, a radio. In particular, communication device 100 may be a communication device of an airborne communication system. Since the power supply 1 provides a redundant and safe power supply having a small volume and low weight, such a power supply is beneficial for mobile applications, in particular for airborne applications. For example, communication device 100 may be a radio of an air traffic control system. Such a radio may establish a communication link between an airborne device, for example an airplane, helicopter or the like, and a ground station. However, any other kind of communication, for example a communication with a satellite or another airborne device may be possible, too.

Furthermore, communication device 100 with the power supply 100 may be also any other kind of communication device, for example a ground-based communication device or a mobile communication device. For example, communication device 100 may be a radio of a ground-based station in an air traffic control system. However, it is understood, that any other kind of communication device, in particular any kind of mobile radio may be possible.

Furthermore, power supply 100 may be used as power supply for any other kind of device, in particular devices requiring a high degree of availability for safety with respect to the operation conditions.
Figure 8 shows a schematic flow diagram of a method for controlling a power supply 1 according to an embodiment. It is understood, that the method for controlling the power supply 1 may comprise any kind of appropriate method step as defined above in connection with the power supply 1. Accordingly, power supply 1 as described above may comprise any appropriate component in order to perform an operation as described below in connection with the method.

In a first step S1, an operating mode of the first power source 10 may be determined. In case that the first power source 10 is in active operating mode, the voltage level of the second output voltage provided by the second power source 20 may be decreased in step S2. In particular, the voltage level may be decreased below a voltage level of the first output voltage provided by the first power source 10.

Alternatively, in case that the first power source 10 is deactivated, it may be possible to increase the output voltage of the second power source 20 in step S3. In particular, the voltage level of the second output voltage provided by the second power source 20 may be set to a desired output voltage or a voltage level higher than the output voltage provided by the first power source 10.

Summarizing, the present invention relates to a power supply arrangement comprising at least two power sources. The operation of the individual power sources is prioritized by adapting the voltage level of the output voltages provided by the individual power sources. In particular, the output voltages are set such that the output voltage of an active power source is higher than an output voltage of a standby power source. In this way, a control and prioritization of power supply with multiple power sources can be performed in very simple, efficient and reliable manner.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon re-viewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not in-tended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

### List of references

- 1: power supply

- 10, 20, 80: power source
- 11, 21: output port
- 22, 82: voltage controller
- 25: battery

- 31, 32: diode
- 40: control unit
- 41, 42: semiconductor switch

- 50: monitoring device
- 51: reference voltage source
- 52: comparator

- 60: voltage divider
- 61, 62, 63: resistor
- 65: switch
- 66: Zener diode

- 100: communication device

## Claims

1. Power supply (1), comprising:
a first power source (10) configured provide a first output voltage at a first output port (11);
a second power source (20) configured to provide a second output voltage at a second output port (21), wherein the second power source (20) comprises a voltage controller (22) configured to control the second output voltage,
an output terminal (30), wherein the output terminal (30) is electrically coupled with the first output port (11) of the first power source (10) and the second output port (21) of the second power source (20);
wherein the voltage controller (22) of the second power source (20) is configured to adapt the second output voltage of the second power source (20) based on an operating mode of the first power source (10).

2. Power supply (1) according to claim 1, comprising a first diode (31) arranged in an electrical path between the first output port (11) of the first power source (10) and the output terminal (30) of the power supply (1), and
a second diode (32), arranged in an electrical path between the second output port (22) of the second power source (20) and the output terminal (30) of the power supply (1).

3. Power supply (1) according to claim 2, wherein a semiconductor switch (41, 42) is arranged in parallel to the first diode (31) and the second diode (32), and
wherein the power supply (1) comprises a control unit (40) configured to close one of the semiconductor switches (41, 42).

4. Power supply (1) according to any of claims 1 to 3, wherein the voltage controller (22) of the second power source (20) is configured to reduce the output voltage of the second power source (20), if the first power source (10) is in an active operating mode.

5. Power supply (1) according to any of claims 1 to 4, wherein the voltage controller (22) of the second power source (20) is configured to increase the output voltage of the second power source (20), if the first power source (10) is deactivated.

6. Power supply (1) according to claim 5, wherein the voltage controller (22) of the second power source (20) is configured to increase the output voltage of the second power source (20) to a predefined voltage level.

7. Power supply (1) according to any of claims 1 to 6, comprising a monitoring device (50) configured to receive the first output voltage and to determine the operating status of the first power supply (10) based on a voltage level of the first output voltage (10).

8. Power supply according to claim 7, wherein the monitoring device comprises a reference voltage source (51) configured to provide a reference voltage, and
wherein the monitoring device (50) is configured to determine an active operating mode of the first power source, if the voltage level of the first output voltage is equal or higher than a voltage level of the reference voltage.

9. Power supply (1) according to any of claims 1 to 8, wherein the first power source (10) is configured to provide a status signal, indicating the operating mode of the first power source (10), and
wherein the voltage controller (22) of the second power source (20) is configured to receive the status signal provided by the first power source (10) and to adapt the second output voltage based on the received status signal.

10. Power supply (1) according to claim 9, wherein the voltage controller (22) comprises a voltage divider (60) with at least three resistors (61, 62, 63) in series, wherein the voltage divider (60) is arranged between the output port (21) of the second power supply (20) and a reference potential, and
wherein a first node (N1) of the voltage divider (60) is electrically connected with an interface of the first power supply (10) which provides the status signal, and a second node (N2) of the voltage divider (60) is electrically connected with the voltage controller (20).

11. Power supply (1) according to any of claims 1 to 9, wherein the voltage controller (22) comprises a voltage divider (60) and a control switch (65), wherein the control switch (65) is configured to bypass a segment (63) of the voltage divider (60) based on the operation mode of the first power source (10), and
wherein the voltage controller (22) is configured to control the second output voltage based on a voltage at a node (N1) of the voltage divider.

12. Power supply (1) according to any of claims 1 to 11, wherein the second power source (20) is shut down or in a stand-by state, if the first power source (10) is in an active operating mode, and wherein the second power source (20) is activated, if the first power source (10) is deactivated.

13. Power supply (1) according to any of claims 1 to 12, wherein the second power source (20) comprises a battery (25).

14. Power supply (1) according to any of claims 1 to 13, comprising at least one further power source (80), wherein each further power source (80) comprises a further voltage controller (82) configured to adapt the output voltage of the respective further power source (80) based on the operating mode of the first power source (10) and an operating mode of the second power source (20).

15. Use of a power supply (1) according to any of claims 1 to 14 in a communication device (100), in particular a radio.

16. Communication device (100) comprising a power supply (1) according to any of claims 1 to 14.

17. Method for controlling a power supply (1) with at least two power sources (10, 20), wherein an output port (11, 21) of each of the at least two power sources (10, 20) is electrically connected to an output terminal (30) of the power supply (1), the method comprising:
detecting (S1) an operating mode of a first power source (10) of the at least two power sources (10, 20);
set (S2) an output voltage of a second power source (20) of the at least two power sources (10, 20) to a first voltage level, if the first power source (10) is in an active operating mode, and
set (S3) the output voltage of the second power source (20) to a second voltage level, if the first power source (10) is deactivated,
wherein the second voltage level is different from the first voltage level.
